# EUROPEAN PATENT SPECIFICATION

(11) **EP 3 435 127 B1**
(45) Date of publication and mention of the grant of the patent: **16.06.2021**
(21) Application number: 17769807.3
(22) Date of filing: 27.02.2017
(51) Int. Cl.: G02B 6/32, B23K 26/064, G02B 27/00, B23K 26/06, G02B 6/38, G02B 6/42, G03F 7/20, H01S 3/02

(54) **FIBER SPATIAL COUPLING DEVICE**
FASERRÄUMLICHE KOPPELVORRICHTUNG
DISPOSITIF DE COUPLAGE SPATIAL DE FIBRE

(30) Priority: 23.03.2016 JP 2016057967
(43) Date of publication of application: 30.01.2019
(73) Proprietor: Panasonic Intellectual Property Management Co., Ltd., Osaka-shi, Osaka 540-6207 (JP)
(72) Inventor: TAKENAKA Yoshiaki, Osaka 540-6207 (JP); NISHIMURA Hitoshi, Osaka 540-6207 (JP); RYUDO Makoto, Osaka 540-6207 (JP); WANG Jingbo, Osaka 540-6207 (JP); NISHIO Masatoshi, Osaka 540-6207 (JP); EIZUMI Kiyotaka, Osaka 540-6207 (JP); YAMAGUCHI Hideaki, Osaka 540-6207 (JP); ISHIKAWA Ryo, Osaka 540-6207 (JP); NAGAYASU Doukei, Osaka 540-6207 (JP)
(74) Representative: Vigand, Philippe
(86) International application number: PCT/JP2017/007272
(87) International publication number: WO 2017/163762

(56) References cited:
- EP-A1- 2 840 670
- JP-A- H07 276 072
- JP-A- 2001 337 251
- JP-A- 2006 039 147
- JP-A- 2008 026 456
- JP-A- 2013 239 696
- JP-A- 2014 223 642
- JP-U- H0 666 053
- JP-U- S5 943 904
- US-A1- 2008 019 412
- US-A1- 2009 141 746
- US-A1- 2009 180 510

## Description

### TECHNICAL FIELD

The present disclosure relates to a fiber spatial coupling device that allows a beam to enter fiber by a collecting lens, and transmits the beam.

### BACKGROUND ART

Laser light emitted from a laser oscillator needs to be transmitted to a machining point (machining head) to be used for machining. Examples of methods for transmitting laser light include a method using a mirror, a method using fiber, and the like. Laser light whose transmission loss by fiber is small is transmitted using fiber because the laser light is transmitted easily.

In the transmitting of laser light using fiber, in general, by coupling the laser light to a process fiber using a fiber spatial coupling device including an optical system, the laser light is led to a machining point (machining head) to be used for welding or cutting process.

When laser light is coupled to a process fiber, it is necessary to prevent an end face of the process fiber from being contaminated with dust and the like. In particular, when the process fiber is exchanged, the end face of the process fiber may be contaminated. Therefore, a fiber coupling device including a mechanism for preventing contamination has been demanded.

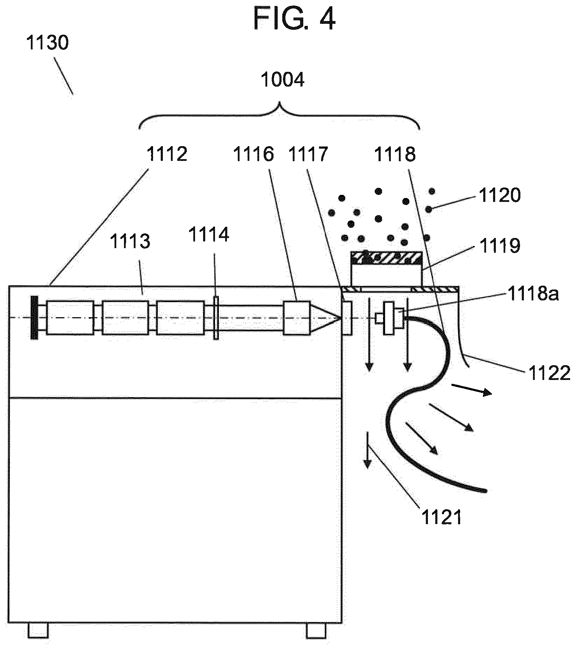

FIG. 4 is a schematic view showing a configuration of laser processing device 1130 including conventional fiber spatial coupling device 1004. Fiber spatial coupling device 1004 includes housing 1112, collecting lens 1116, receptacle 1117, and process fiber 1118.

In fiber spatial coupling device 1004, the inside of housing 1112 is filled with purge gas 1113. Laser oscillator 1114 emits laser light. Collecting lens 1116 collects the laser light. Incident end 1118a of process fiber 1118 is inserted into receptacle 1117 and held therein.

The laser light is collected into process fiber 1118. Clean unit 1119 has a filter for removing foreign matter 1120 in the surroundings. Clean unit 1119 blows out clean airflow 1121 downward via this filter. Sheet 1122 suppresses dissipation of clean airflow 1121.

Next, an operation of fiber spatial coupling device 1004 is described.

Firstly, the laser light emitted from laser oscillator 1114 is collected by collecting lens 1116, enters process fiber 1118, is transmitted, and is machined with a machining head (not shown).

When process fiber 1118 needs to be exchanged, clean unit 1119 is allowed to operate so as to blow out clean airflow 1121 from which foreign matter 1120 has been removed, and process fiber 1118 is exchanged in a region surrounded by sheet 1122. Thereafter, collecting lens 1116 is adjusted and the exchange is completed. Note here that prior art literatures relating to this application include, for example, PTL 1 and PTL 2.

### Citation List

### Patent Literature

PTL 1: Japanese Patent Application Unexamined Publication No. 2000-208834
PTL 2 : US Patent Application Publication No.2008/019412.

### SUMMARY

A fiber spatial coupling device is described according to claim 1. Different embodiments are set out in the dependent claims.

### BRIEF DESCRIPTION OF THE DRAWINGS

FIG. 1 is a schematic view showing a configuration of a fiber spatial coupling device in accordance with a first exemplary embodiment.
FIG. 2 is a schematic view showing a configuration of a fiber spatial coupling device in accordance with a second exemplary embodiment.
FIG. 3 is a schematic view showing a configuration of a fiber spatial coupling device in accordance with a third exemplary embodiment.
FIG. 4 is a schematic view showing a configuration of a laser processing device of a conventional fiber spatial coupling device.

### DESCRIPTION OF EMBODIMENTS

A dust prevention mechanism of conventional fiber spatial coupling device 1004 needs a wide space to be filled with clean airflow 1121, and strong clean unit 1119. Furthermore, receptacle 1117 and process fiber 1118 are included in an open space. Therefore, although the degree of cleanliness of a clean airflow at the time of blowing out can be kept constant, it is difficult to keep the degree of cleanliness in the space constant.

Hereinafter, exemplary embodiments of the present disclosure are described with reference to drawings. In the following drawings, the same numbers are given to the same component elements, and, therefore, the description thereof may be omitted.

### FIRST EXEMPLARY EMBODIMENT

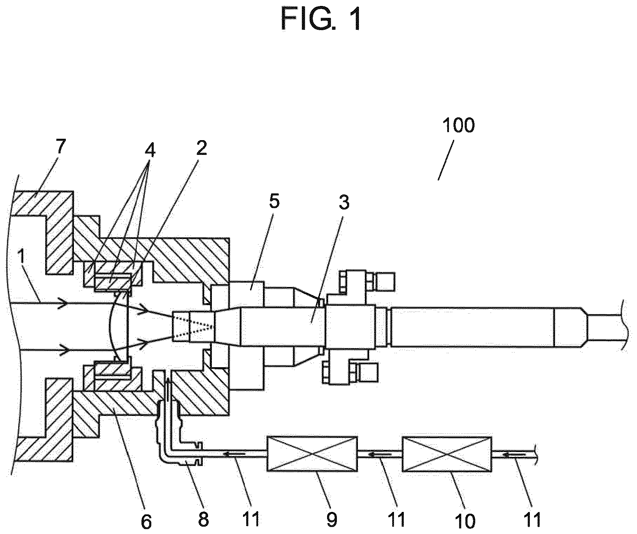

FIG. 1 is a schematic view showing a configuration of fiber spatial coupling device 100 in accordance with a first exemplary embodiment.

As shown in FIG. 1, fiber spatial coupling device 100 includes collecting lens 2 (optical system), detachable process fiber 3, and main body 6. Collecting lens 2 collects laser light 1 into process fiber 3. Process fiber 3 guides laser light 1 collected by collecting lens 2. Main body 6 has a substantially box shape, and holds collecting lens 2. Furthermore, fiber spatial coupling device 100 may include lens holder 4, receptacle 5, and housing 7. Lens holder 4 holds collecting lens 2. Receptacle 5 detachably holds process fiber 3. Housing 7 holds main body 6.

Furthermore, main body 6 of fiber spatial coupling device 100 is provided with gas supply port 8 (purge gas supply port) for supplying gas (purge gas). Gas supply port 8 is provided in main body 6 between collecting lens 2 and receptacle 5. In other words, gas supply port 8 is provided between process fiber 3 and collecting lens 2. Furthermore, fiber spatial coupling device 100 includes filter 9 (particle removal filter), dehumidifier 10, and gas piping 11. Filter 9 removes dust from the purge gas. Dehumidifier 10 dehumidifies the purge gas. Gas piping 11 supplies the purge gas.

Next, an operation of fiber spatial coupling device 100 is described.

Laser light 1 passes through the inside of housing 7 and main body 6, and is transmitted to collecting lens 2. Inside main body 6, collecting lens 2 is adjusted in the directions of three axes of XYZ (rectangular coordinate system) via lens holder 4. Thus, laser light 1 is collected into an optimum position of process fiber 3. Collected laser light 1 is transmitted through the inside of process fiber 3.

Guided laser light 1 is transmitted to a machining point (machining head) by process fiber 3, and used as a light source for welding process, cutting process, and the like.

Usually, in order to prevent damage of collecting lens 2, process fiber 3, and an optical element inside of housing 7, and in order to prevent dust from being attached thereto, the insides of main body 6 and housing 7 are kept clean by an airtight structure and the like. However, when process fiber 3 is exchanged because of deterioration or damage of process fiber 3, it is necessary to detach process fiber 3 at receptacle 5.

When process fiber 3 is detached, the inside of main body 6 is exposed to the outside air and dust may enter the inside.

In fiber spatial coupling device 100 of this exemplary embodiment, a clean purge gas, which has passed through dehumidifier 10 and filter 9, is supplied to the inside of main body 6 from gas supply port 8 provided in main body 6. Then, the inside of main body 6 is positively pressurized, and dust can be prevented from entering the inside of main body 6. In other words, when process fiber 3 is detached, fluid resistance received by the purge gas discharged to the outside from gas supply port 8 through an opening of receptacle 5 is smaller than fluid resistance received by the purge gas flowing to the inside of main body 6 from gas supply port 8 through the surroundings of collecting lens 2 (optical system). As a result, dust can be prevented from entering the inside of main body 6.

Note here that in this exemplary embodiment, filter 9 and dehumidifier 10 are linked to gas supply port 8. By providing dehumidifier 10, supplied purge gas can be sufficiently dried, and reliability with respect to humidity is improved. Furthermore, by providing filter 9, the supplied purge gas can be sufficiently cleaned, and the reliability with respect to dust is improved. By providing both filter 9 and dehumidifier 10, the supplied purge gas can be sufficiently cleaned and dried.

Note here that when high-performance filter 9 and dehumidifier 10 are used, dust derived from the purge gas can be further reduced, and it is possible to further prevent dust from being attached to an optical element such as collecting lens 2. For example, it is preferable to use, as filter 9, a filter having performance of removing 90% or more of dust having 1 micrometer or more. Furthermore, it is preferable to use, as dehumidifier 10, a dehumidifier having performance of supplying dry gas having a dew point of -10°C or less.

Note here that in a configuration in which gas supply port 8 is always supplied with a purge gas, the insides of main body 6 and housing 7 are always in a positive pressure. Therefore, even when main body 6 and housing 7 do not have a strict airtight structure, it is possible to prevent dust from entering.

Note here that when main body 6 and housing 7 have an airtight structure, usually, dust does not enter the structure. Therefore, main body 6 may be supplied with purge gas only when process fiber 3 is detached. In this case, when process fiber 3 is detached, the inside of housing 7 is in a positive pressure. However, in this case, it is necessary to seal any of gas supply port 8 or filter 9 or dehumidifier 10.

As mentioned above, according to this exemplary embodiment, it is possible to prevent dust from entering main body 6 and housing 7 due to detachment of process fiber 3. Therefore, dust can be prevented from being attached to collecting lens 2, process fiber 3, and other optical elements; and contamination with dust can be prevented. As a result, it is possible to suppress deterioration or damage of these optical elements by laser light 1. Consequently, fiber spatial coupling device 100 having high reliability can be provided.

Furthermore, in this exemplary embodiment, main body 6 is provided with gas supply port 8. Since the purge gas is discharged to the outside from gas supply port 8 through the opening of receptacle 5, even when the volume of housing 7 is large, it is not necessary to supply a large amount of purge gas at a high pressure.

Furthermore, by providing main body 6 with gas supply port 8, the purge gas can be supplied directly to the inside of main body 6 with a predetermined pressure. In a configuration in which purge gas is supplied from housing 7, and the inside of main body 6 is full of the purge gas, it becomes difficult to sufficiently secure a flow amount (pressure) of the purge gas necessary to pull out process fiber 3. However, this exemplary embodiment does not have such difficulty, since it is possible to secure a sufficient flow amount (pressure) of the purge gas necessary to pull out process fiber 3.

Furthermore, when the purge gas is supplied from housing 7, a high-pressure purge gas is required. Therefore, collecting lens 2 having a predetermined thickness or more is required to resist a pressure of the gas. However, in this exemplary embodiment, by providing main body 6 with gas supply port 8, a purge gas can be supplied directly to the inside of main body 6 with a desired pressure. Therefore, the thickness of collecting lens 2 can reduced. Furthermore, since the purge gas is supplied directly to the inside of main body 6, it is possible to easily secure a flow amount of the purge gas necessary to prevent dust from entering, when process fiber 3 is pulled out.

Furthermore, it is possible to shorten the time until purge gas reaches a necessary pressure when process fiber 3 is pulled out.

Furthermore, since clean purge gas, which has passed through filter 9 and dehumidifier 10, is supplied directly to the inside of main body 6, cleaner purge gas can be supplied as compared with the case where a purge gas, which has supplied in housing 7, been brought into contact with various members, and then passed through the members.

Furthermore, since the inside of main body 6 is directly purged with gas, instead of supplying housing 7 with a purge gas, a purge gas is easily transmitted between collecting lens 2 and process fiber 3, so that attachment of dust can be prevented.

### SECOND EXEMPLARY EMBODIMENT

In this exemplary embodiment, the same numerals are given to the same configurations as in the first exemplary embodiment, and detailed description thereof is omitted. This exemplary embodiment is different from the first exemplary embodiment in that air is used as a purge gas, main body 26 is provided with pressure sensor 230 as a pressure measuring unit, and pump 250 as a gas supply unit that pressurizes and supplies purge air is controlled based on a signal from pressure sensor 230.

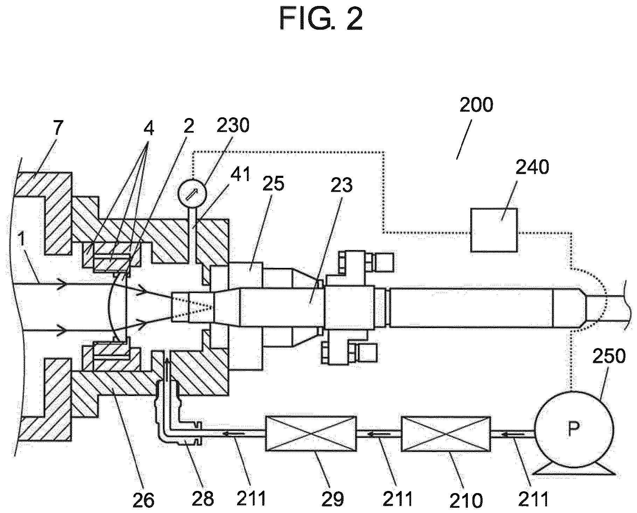

FIG. 2 is a schematic view showing a configuration of fiber spatial coupling device 200 in accordance with a second exemplary embodiment.

As shown in FIG. 2, fiber spatial coupling device 200 includes collecting lens 2 (optical system), process fiber 23, and main body 26. Furthermore, fiber spatial coupling device 200 may include receptacle 25 and housing 7. Process fiber 23 guides laser light 1 collected by collecting lens 2. Receptacle 25 detachably holds process fiber 23. In other words, receptacle 25 is used to easily detach process fiber 23. Main body 26 has a substantially box shape, and holds collecting lens 2. Housing 7 holds main body 26.

Furthermore, fiber spatial coupling device 200 has gas supply port 28 (purge air supply port). Furthermore, fiber spatial coupling device 200 may include filter 29 (particle removal filter), dehumidifier 210, and gas piping 211. Gas supply port 28 is a supply port having a diameter of about 4 millimeters and provided in main body 26 between collecting lens 2 and receptacle 25. Filter 29 is used to remove dust from the purge air. Specifically, filter 29 removes particles having a diameter of 1 micrometer or more. Dehumidifier 210 dehumidifies the purge air. Gas piping 211 is used to transport the purge air. Specifically, gas piping 211 is a tube having an inner diameter of 4 millimeters and made of a fluorocarbon resin.

The substantially box-shaped main body 26 has hole 41 having a diameter of about 4 millimeters in a position that does not face gas supply port 28. Pressure sensor 230 that is the pressure measuring unit configured to measure a pressure inside the main body is provided via hole 41. On the other hand, in the passage of gas piping 211, pump 250 for pressurizing and supplying the purge air is provided. An inlet side of pump 250 is opened to the atmosphere. A discharge side of pump 250 is coupled to dehumidifier 210 and filter 29 via gas piping 211. Pump 250 is coupled to pressure sensor 230 via pump control unit 240. Pump 250 is controlled by pump control unit 240 such that pump 250 is turned on and off based on a signal from pressure sensor 230.

Next, an operation of fiber spatial coupling device 200 is described.

Pump 250 is turned on and off so that pressure sensor 230 provided to main body 26 always maintains a predetermined reference pressure. As the reference pressure, for example, a gauge pressure is desirably 0.01 mega pascal to 0.1 mega pascal, and more desirably from 0.01 mega pascal to 0.05 mega pascal. Note here that the gauge pressure is a relative pressure in a case where the atmospheric pressure is zero. For example, in a case where the reference pressure is set at 0.05 mega pascal, when the gauge pressure inside main body 26 is less than 0.05 mega pascal, pump 250 is driven. Then, until the gauge pressure inside main body 26 exceeds 0.05 mega pascal, clean and dehumidified dry air is supplied to the inside of main body 26. When the gauge pressure inside main body 26 exceeds 0.05 mega pascal, pump 250 is stopped.

For example, a case where process fiber 23 is to be pulled out from main body 26 is considered. Firstly, in order to pull out process fiber 23 from main body 26, receptacle 25 is operated to be loosen. At the time when receptacle 25 is loosen, an internal pressure of main body 26 is lowered from the reference pressure, and pump 250 is operated.

Subsequently, when process fiber 23 is pulled out from main body 26, the internal pressure of main body 26 is reduced to the atmospheric pressure. In this state, since the internal pressure is lower than the reference pressure, pump 250 continues to be driven, and clean and dehumidified dry air continues to be supplied to the inside of main body 26. The supplied air continues to be discharged from an opening of receptacle 25 to the outside (in the atmosphere). In other words, when process fiber 23 is taken out, fluid resistance received by air discharged from gas supply port 28 to the outside through the opening of receptacle 25 is smaller than fluid resistance received by air flowing from gas supply port 28 to the inside of main body 26 through the surroundings of collecting lens 2 (optical system). As a result, it is possible to prevent dust from entering the inside of main body 6.

Then, process fiber 23 is inserted into main body 26 again. Then, receptacle 25 is operated and locked so that process fiber 23 is not pulled out. Thus, the internal pressure of main body 26 is increased, the gauge pressure reaches 0.05 mega pascal, and pump 250 is stopped.

Note here that in this exemplary embodiment, the internal pressure of main body 26 is monitored using pressure sensor 230 to determine insertion/pulling-out of process fiber 23. However, the insertion/pulling-out of process fiber 23 may be determined by monitoring the change of the brightness (desirably, a quantity of visible light) inside main body 26 using a photodiode.

Furthermore, in this exemplary embodiment, pump 250 is on/off controlled. However, a discharge amount may be made successively variable by controlling a voltage or an electric current applied to pump 250.

Furthermore, pump 250 is on/off controlled such that the internal pressure of main body 26 becomes constant. However, controlling may be carried out such that pump 250 is stopped when laser irradiation is started, and pump 250 is driven when the laser irradiation is stopped.

Furthermore, an inlet port of pump 250 is opened to the atmosphere, but it may be connected to a passage made of a closed loop for a purge air or a purge gas.

Furthermore, in this exemplary embodiment, filter 29 and dehumidifier 210 are provided at the discharge side of pump 250. However, filter 29 and dehumidifier 210 may be provided at the inlet side of pump 250, and the discharge side of pump 250 may be coupled to gas supply port 28 via gas piping 211.

As mentioned above, according to this exemplary embodiment, the pressure of the inside of main body 26 is always maintained to be higher than the reference pressure. Thereby, the inside of main body 26 is always in a positive pressure. As a result, dust does not enter the inside of main body 26 from the outside.

Furthermore, the inside of main body 26 is monitored, and the on/off of pump 250 is controlled. Thereby, even when process fiber 23 is pulled out, pump 250 is driven and the inside of main body 26 can be always maintained in a positive pressure. As a result, dust does not enter the inside of main body 26 from the outside.

Furthermore, the inside of main body 26 is monitored, and the on/off of pump 250 is controlled. Thereby, it is not necessary to always operate pump 250. Therefore, the exchange period or the life of pump 250, filter 29, and dehumidifier 210 can be increased.

Furthermore, since purge air is used instead of purge gas, facility or an operation cost accompanying purge gas is not needed. Furthermore, by providing pressure sensor 230 in a position that does not face gas supply port 28, the internal pressure of main body 26, instead of the discharge pressure of the purge air, can be measured.

Furthermore, since the inside of main body 26 is always in a positive pressure, force necessary to pull out process fiber 23 is reduced, thus facilitating pulling out.

### THIRD EXEMPLARY EMBODIMENT

In this exemplary embodiment according to the invention, the same numerals are given to the same configurations as in the first and second exemplary embodiments, and detailed description thereof is omitted. This exemplary embodiment is different from the second exemplary embodiment in the following points: this exemplary embodiment includes disconnection detection circuit 370 of a receptacle, which is a process fiber insertion/pulling-out determination unit, that is, an unlocking detection circuit, instead of controlling a pump that pressurizes and supplies purge air; furthermore, there is provided relief valve 360 as a pressure release unit that is opened when an internal pressure of main body 36 is excessive and releases the excessive pressure; and the inner diameter of the system for supplying purge air is increased.

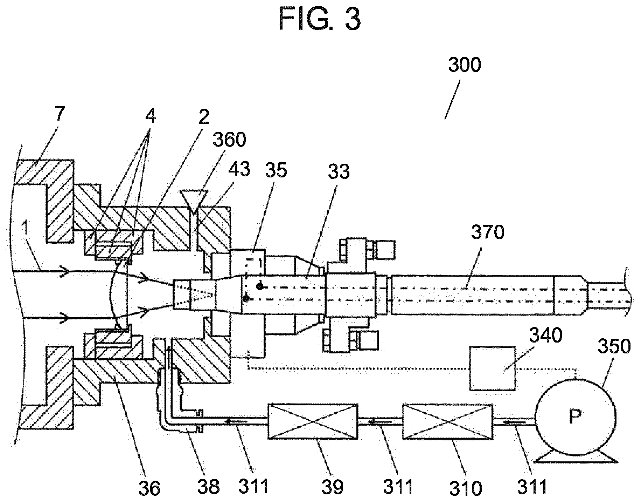

FIG. 3 is a schematic view showing a configuration of fiber spatial coupling device 300 in accordance with a third exemplary embodiment according to the invention.

As shown in FIG. 3, fiber spatial coupling device 300 includes collecting lens 2 (optical system), process fiber 33, and main body 36. Process fiber 33 guides laser light 1 collected by collecting lens 2. Receptacle 35 detachably holds process fiber 33. That is to say, receptacle 35 is used to easily detach process fiber 33. Main body 36 has a substantially box shape, and holds collecting lens 2. Housing 7 holds main body 36.

In addition, process fiber 33 includes disconnection detection circuit 370 for detecting disconnection. In addition, fiber spatial coupling device 300 has gas supply port 38 (purge air supply port). Furthermore, fiber spatial coupling device 300 includes filter 39 (particle removal filter), dehumidifier 310, and gas piping 311. Gas supply port 38 is a supply port having a diameter of 6 millimeters and provided in main body 36 between collecting lens 2 and receptacle 35. Filter 39 is used to remove dust from the purge air. Specifically, filter 39 removes particles having a diameter of 5 micrometers or more. Dehumidifier 310 dehumidifies the purge air. Gas piping 311 is a fluorocarbon resin tube having an inner diameter of 6 millimeters, and is used to supply purge air.

Furthermore, main body 36 has hole 43 having a diameter of about 4 millimeters inside thereof. Hole 43 is provided with relief valve 360 having a check valve for preventing back-flow of air. Herein, a set gauge pressure of relief valve 360 is from 0.01 mega pascal to 0.3 mega pascal, and desirably 0.01 mega pascal to 0.1 mega pascal.

Pump 350 for pressurizing and supplying purge air is provided in passage of gas piping 311. The inlet side of pump 350 is opened to the atmosphere. The discharge side of pump 350 is coupled to filter 39 and dehumidifier 310 via gas piping 311. Pump 350 is coupled to a disconnection detection terminal of receptacle 35 via pump control unit 340.

Furthermore, pump control unit 340 receives irradiation with laser light 1, that is, an on/off signal of laser light 1, and controls pump 350 according to the signal. Specifically, pump control unit 340 operates pump 350 only when the off-state of laser light 1 and disconnection are detected. In other cases, pump control unit 340 does not operate pump 350.

Next, an operation of fiber spatial coupling device 300 is described.

Laser light 1 passes through housing 7, and is transmitted to collecting lens 2. Collecting lens 2 is set inside main body 36 and is adjusted in the directions of three axes of XYZ (rectangular coordinate system) via lens holder 4. Thus, laser light 1 is collected into an optimum position of process fiber 3, and guided to process fiber 33. Guided laser light 1 is transmitted to a machining point (machining head) by process fiber 33, and is used as a light source for welding process, cutting process, and the like.

Firstly, a case in which irradiation with laser light 1 is being carried out is described. At this time, process fiber 33 is inserted into main body 36 using receptacle 35. Process fiber 33 and receptacle 35 form a closed loop, which functions as disconnection detection circuit 370. Specifically, a closed loop made of metal such as copper wire is formed inside or outside of process fiber 33 and receptacle 35. When process fiber 33 is coupled to main body 36 via receptacle 35, disconnection is not detected. Therefore, pump 350 is not operated. Also, relief valve 360 does not respond.

Next, a case in which process fiber 33 is pulled out from main body 36 is described. In this case, laser is in an off-state. In order to pull out process fiber 33 from main body 36, receptacle 35 is unlocked. Then, receptacle 35 and process fiber 33 are separated from each other, disconnection detection circuit 370 becomes an open loop, and disconnection is detected.

Pump control unit 340 detects the off-state of laser is off and disconnection, and operates pump 350. When pump 350 is operated, clean and dehumidified dry air is supplied to the inside of main body 36. The purge air makes the internal pressure of main body 36 be 0.1 mega pascal or more. Consequently, relief valve 360 is opened, and the purge air is discharged to the outside air.

Also after process fiber 33 is completely pulled out from main body 36, a purge air continues to be injected from gas supply port 38, and the purge air is discharged from the inside of main body 36 to the outside of main body 36 through an opening of receptacle 35. At this time, since the internal pressure of main body 36 becomes 0.05 mega pascal or less, relief valve 360 is closed.

In addition, a case where disconnection is detected for some reasons although receptacle 35 is not unlocked is assumed. In this case, if pump 350 is operated, the pressure inside main body 36 is kept within a predetermined value by relief valve 360.

Note here that in this exemplary embodiment, disconnection detection circuit 370 is formed by process fiber 33 and receptacle 35. However, an unlocking signal may be used for receptacle 35. Furthermore, this exemplary embodiment has a structure in which relief valve 360 is directly provided to main body 36. However, relief valve 360 and main body 36 may be separated from each other. For example, relief valve 360 may be coupled to main body 36 via a tube.

As mentioned above, according to this exemplary embodiment of the invention, to the inside space of main body 36 provided with relief valve 360, stop and operation of pump 350 are controlled depending on the insertion/pulling-out of process fiber 33. Thus, since pump 350 is operated when process fiber 33 is pulled out, dust can be prevented from entering the inside of main body 36.

Furthermore, since relief valve 360 is provided, an excessive pressure is not always generated inside main body 36. Therefore, displacement of collecting lens 2 due to an excessive pressure is not generated.

Furthermore, when process fiber 33 is pulled out, an operation of starting purge air is not required to be carried out again. Therefore, the inside of main body 36 is prevented from being contaminated because process fiber 33 is pulled out omitting supplying of a purge air.

As mentioned above, the fiber spatial coupling device of the present invention has a structure of directly feeding purge gas into a space between a collecting lens and a process fiber. Therefore, dust can be prevented from entering the inside of fiber spatial coupling device. As a result, it is possible to attaching or contamination of dust to the collecting lens and the process fiber.

Therefore, the fiber spatial coupling device of the present invention not only can secure the reliability or quality as a fiber spatial coupling device, but also can secure the reliability of the entire laser oscillator.

### INDUSTRIAL APPLICABILITY

A fiber spatial coupling device of the present disclosure has a structure for preventing dust from entering a laser light transmitting space. Therefore, the fiber spatial coupling device can secure the reliability and quality as a fiber spatial coupling device and a laser oscillator, and is useful for a laser oscillator using a process fiber.

### REFERENCE MARKS IN THE DRAWINGS

- 100: fiber spatial coupling device
- 1: laser light
- 2: collecting lens
- 3: process fiber
- 4: lens holder
- 5: receptacle
- 6: main body
- 7: housing
- 8: gas supply port
- 9: filter
- 10: dehumidifier
- 11: gas piping
- 23: process fiber
- 25: receptacle
- 26: main body
- 28: gas supply port
- 29: filter
- 33: process fiber
- 35: receptacle
- 36: main body
- 38: gas supply port
- 39: filter
- 41, 43: hole
- 100, 200, 300: fiber spatial coupling device
- 210: dehumidifier
- 211: gas piping
- 230: pressure sensor (pressure measuring unit)
- 240: pump control unit
- 250: pump (gas supply unit)
- 310: dehumidifier
- 311: gas piping
- 340: pump control unit
- 350: pump (gas supply unit)
- 360: relief valve (pressure release unit)
- 370: disconnection detection circuit
- 1004: fiber spatial coupling device
- 1112: housing
- 1113: purge gas
- 1114: laser oscillator
- 1116: collecting lens
- 1117: receptacle
- 1118: process fiber
- 1118a: incident end
- 1119: clean unit
- 1120: foreign matter
- 1121: clean airflow
- 1122: sheet
- 1130: laser machining device

## Claims

1. A fiber spatial coupling device (300) comprising:
a detachable process fiber (33) that guides laser light (1);
an optical system (2) that collects the laser light (1) into the process fiber (33); and
a main body (36) that holds the optical system (2), and has a supply port (38) for supplying gas to a space between the process fiber (33) and the optical system (2),
wherein a filter (39) is linked to the supply port (38), and gas that has passed through the filter (39) is supplied to an inside of the main body (36) through the supply port (38),
**characterized in that** the fiber spatial coupling device (300) further comprises:
a dehumidifier (310) linked to the supply port (38), and gas that has passed through the dehumidifier (310) is supplied to the inside of the main body (36) through the supply port (38),
a pressure release unit (360) configured to release the gas in an inside of the main body (36) when a pressure of an inside of the main body (36) exceeds a predetermined reference value,
a receptacle (35) that holds the process fiber (33) in the main body (36);
a disconnection detection circuit (370) including the process fiber (33) and the receptacle (35),
a pump (350) having a discharge side coupled to the filter (39) and the dehumidifier (310) and
a pump control unit (340) configured to operate the pump (350) only when an off-state of laser light and disconnection are detected by the disconnection detection circuit (370).

2. The fiber spatial coupling device (300) of claim 1, wherein the filter (39) has performance of removing 90% or more of dust having a diameter of 1 micrometer or more.

3. The fiber spatial coupling device (300) of claim 1, wherein the dehumidifier (310) has performance of supplying dry gas having a dew point of -10°C or less.

4. The fiber spatial coupling device (300) of any one of claims 1 to 3, wherein the gas supplied from the supply port (38) is air.

## Patentansprüche

1. Räumliche Faserkopplungsvorrichtung (300), umfassend:
eine abnehmbare Prozessfaser (33), die Laserlicht (1) leitet;
ein optisches System (2), das das Laserlicht (1) in der Prozessfaser (33) sammelt; und
einen Hauptkörper (36), der das optische System (2) hält und einen Zufuhranschluss (38) zum Zuführen von Gas zu einem Raum zwischen der Prozessfaser (33) und dem optischen System (2) aufweist,
wobei ein Filter (39) mit dem Zufuhranschluss (38) verknüpft ist und Gas, das durch den Filter (39) hindurch getreten ist, zu einem Inneren des Hauptkörpers (36) durch den Zufuhranschluss (38) zugeführt wird,
**dadurch gekennzeichnet, dass** die räumliche Faserkopplungsvorrichtung (300) weiterhin umfasst:
einen Entfeuchter (310), der mit dem Zufuhranschluss (38) verknüpft ist, und wobei Gas, das durch den Entfeuchter (310) hindurch getreten ist, zu dem Inneren des Hauptkörpers (36) durch den Zufuhranschluss (38) zugeführt wird,
eine Druckentspannungseinheit (360), die dazu konfiguriert ist, das Gas in einem Inneren des Hauptkörpers (36) zu entspannen, wenn ein Druck eines Inneren des Hauptkörpers (36) einen vorherbestimmten Referenzwert übersteigt,
ein Behältnis (35), das die Prozessfaser (33) in dem Hauptkörper (36) hält;
eine Trennungserfassungsschaltung (370), beinhaltend die Prozessfaser (33) und das Behältnis (35),
eine Pumpe (350) mit einer Ausstoßseite, die an den Filter (39) und den Entfeuchter (310) gekoppelt ist, und
einen Pumpensteuereinheit (340), die dazu konfiguriert ist, die Pumpe (350) nur zu betreiben, wenn ein Aus-Zustand von Laserlicht und eine Trennung von der Trennungserfassungsschaltung (370) erfasst werden.

2. Räumliche Faserkopplungsvorrichtung (300) nach Anspruch 1, wobei der Filter (39) eine Leistung zur Entfernung von Staub mit einem Durchmesser von 1 Mikrometer oder mehr von 90 % oder mehr aufweist.

3. Räumliche Faserkopplungsvorrichtung (300) nach Anspruch 1, wobei der Entfeuchter (310) eine Leistung zur Zuführung von trockenem Gas mit einem Taupunkt von -10 °C oder weniger aufweist.

4. Räumliche Faserkopplungsvorrichtung (300) nach einem der Ansprüche 1 bis 3, wobei das von dem Zufuhranschluss (38) zugeführte Gas Luft ist.

## Revendications

1. Dispositif de couplage spatial de fibre (300) comprenant :
une fibre de traitement détachable (33) qui guide une lumière laser (1) ;
un système optique (2) qui collecte la lumière laser (1) dans la fibre de traitement (33) ; et
un corps principal (36) qui maintient le système optique (2), et a un orifice d'introduction (38) pour introduire un gaz dans un espace entre la fibre de traitement (33) et le système optique (2),
dans lequel un filtre (39) est lié à l'orifice d'introduction (38), et le gaz qui a traversé le filtre (39) est introduit à l'intérieur du corps principal (36) par l'intermédiaire de l'orifice d'introduction (38),
**caractérisé en ce que** le dispositif de couplage spatial de fibre (300) comprend en outre :
un déshumidificateur (310) lié à l'orifice d'introduction (38), et le gaz qui a traversé le déshumidificateur (310) est introduit à l'intérieur du corps principal (36) par l'intermédiaire de l'orifice d'introduction (38),
une unité de détente de pression (360) configurée pour libérer le gaz à l'intérieur du corps principal (36) quand la pression à l'intérieur du corps principal (36) dépasse une valeur de référence prédéterminée,
un réceptacle (35) qui maintient la fibre de traitement (33) dans le corps principal (36) ;
un circuit de détection de déconnexion (370) comprenant la fibre de traitement (33) et le réceptacle (35),
une pompe (350) ayant un côté décharge couplé au filtre (39) et au déshumidificateur (310), et
une unité de commande de pompe (340) configurée pour faire fonctionner la pompe (350) uniquement quand un état hors service de la lumière laser et une déconnexion sont détectés par le circuit de détection de déconnexion (370).

2. Dispositif de couplage spatial de fibre (300) selon la revendication 1, dans lequel le filtre (39) a une performance d'élimination de 90 % ou plus de la poussière ayant un diamètre de 1 micromètre ou plus.

3. Dispositif de couplage spatial de fibre (300) selon la revendication 1, dans lequel le déshumidificateur (310) a une performance de fourniture de gaz sec ayant un point de rosée de -10°C ou moins.

4. Dispositif de couplage spatial de fibre (300) selon l'une quelconque des revendications 1 à 3, dans lequel le gaz introduit depuis l'orifice d'introduction (38) est de l'air.
